# EUROPÄISCHE PATENTANMELDUNG

(11) **EP 4 414 147 A1**
(43) Veröffentlichungstag der Anmeldung: **14.08.2024**
(21) Anmeldenummer: 24156023.4
(22) Anmeldetag: 06.02.2024
(51) Int. Cl.: B27D 1/10, B27M 1/08, B23K 26/36, B23K 26/402

(54) **VERFAHREN ZUM FÜGEN VON HOLZBAUELEMENTEN**

(30) Priorität: 13.02.2023 DE 102023103408
(71) Anmelder: Fraunhofer-Gesellschaft zur Förderung der angewandten Forschung e.V., 80686 München (DE)
(72) Erfinder: Standfuß, Jens, 01277 Dresden (DE); Langer, Maurice, 01277 Dresden (DE); Hauptmann, Jan, 01277 Dresden (DE)
(74) Vertreter: Pfenning, Meinig & Partner mbB

(57) **Zusammenfassung**

Bei dem Verfahren zum Fügen von Holzbauelementen, insbesondere plattenförmigen Holzbauelementen werden
in einem Verfahrensschritt a) an einer zum Fügen genutzten Stirnfläche eines ersten Holzbauelementes Konturelemente und an einer zum Fügen genutzten Stirnfläche eines zweiten Holzbauelementes komplementäre Konturelemente ausgebildet und in einem
zweiten Verfahrensschritt b) die zu fügenden ersten und zweiten Holzbauelemente mit ihren Stirnflächen durch formschlüssigen Eingriff der jeweiligen Konturelemente gefügt. Dabei werden
im Verfahrensschritt a) die Konturelemente mittels mindestens eines von einer Laserstrahlquelle emittierten und in Richtung der jeweiligen Oberfläche der Stirnfläche fokussierten Laserstrahls durch einen lokal definierten Materialabtrag ausgebildet, wobei
insbesondere Laserstrahlung mit einer Wellenlänge > 900 nm eingesetzt wird.

## Beschreibung

Die Erfindung betrifft ein Verfahren zum Fügen von Holzbauelementen, insbesondere plattenförmigen Holzbauelementen.

Die Keilzinkung ist eine Verbindungsmethode von Holz. Sie ermöglicht es, aus einzelnen kürzeren Teilen sehr lange Bohlen, Bretter und Balken herzustellen. Bei dieser Form der Längsverbindung werden zwei Vollhölzer / Bretter auf der Stirnseite über keilförmige Zinken ineinandergreifend verbunden und miteinander verklebt (verleimt). Neben der Verlängerung können mit dieser Methode stabilitätsmindernde Risse und unschöne Äste aus dem Holz entfernt werden. Beim Keilverzinken werden die beiden Teile mit dem gleichen Profil versehen. Dies geschieht üblicherweise mittels Fräsen. Selten wird die Verzahnung mittels Sägen hergestellt. Anschließend werden beide Teile miteinander verklebt. (Siehe nachstehendes Bild aus DIN EN 14080:2013 "Holzbauwerke - Brettschichtholz und Balkenschichtholz - Anforderungen")

Prinzipiell lässt sich jede Holzart mit dem Keilzinkenverfahren verarbeiten. Die tatsächliche Verwendung der verschiedenen Holzarten als Bau- und Werkstoff wird stark durch deren Material-, Verarbeitungs- und Gebrauchseigenschaften bestimmt. Zu den signifikanten Verarbeitungseigenschaften zählen die Zerspanbarkeit und Verklebungsfähigkeit. Insbesondere hinsichtlich Zerspanbarkeit gibt es signifikante Unterschiede zwischen Nadelhölzern und Laubhölzern. Der auftretende Werkzeugverschleiß zum Beispiel beim Fräsen von Keilverzinkungen ist bei Laubhölzern deutlich höher als bei Nadelhölzern. Ebenso ist die Bearbeitungsgeschwindigkeit bei Laubhölzern niedriger als bei Nadelhölzern. Im englischen Sprachraum werden diese Verarbeitungs- und Gebrauchseigenschaften durch die Begriffe "Soft wood" für Nadelhölzer und "Hard Wood" für Laubhölzer prägnant verdeutlicht.

Bedingt durch Klimaveränderungen und wiederholt auftretenden längeren Trockenperioden sind in Europa Nadelhölzer, wie Fichte und Kiefer ("Soft Wood") verstärkt massivem Schädlingsbefall ausgesetzt. Dies macht es für die Forstwirtschaft erforderlich in Zukunft verstärkt auf Laubhölzer ("Hard Wood") bei Neupflanzungen auf Kalamitätsflächen sowie auf Rekultivierungsflächen zurückzugreifen. Für die damit zunehmend zur Anwendung strebenden Laubhölzer ("Hard Wood") sind die Zerspanungsaufwendungen im Vergleich zu Nadelholz ("Soft Wood") wie Fichte/Kiefer sehr hoch. Die Festigkeit des Laubholzes sowie höhere mineralische Anteile im Laubholz führen zu hohem Werkzeugverschleiß und erschweren eine wirtschaftliche Verarbeitung von Laubhölzern zu Brettschichtholz aufgrund des hohen Aufwands für die Herstellung erforderlicher Keilverzinkungen. Aufgrund der bei Laubhölzern geringeren ungestörten Bereiche, d.h. zum Beispiel der Länge astfreier Brettabschnitte im Vergleich zu Nadelhölzern, müssen für Brettschichtholz aus Laubhölzern mehr und kürzere Brettabschnitte mit Keilverzinkung verklebt werden. Damit steigen die Aufwendungen für die Keilverzinkung bei Brettschichtholz aus Laubhölzern überproportional an. Des Weiteren wirkt sich dieser höhere Zerspanungsaufwand negativ auf eine nachhaltige Rohstoffausnutzung aus. Der relative Verschnittanteil liegt somit bei Brettschichtholz aus Laubhölzern signifikant über dem bei Einsatz von Nadelhölzern und stellt ein wirtschaftliches Hemmnis für die technische Anwendung dar.

Die europäischen Norm DIN EN 14080:2013 (D) legt Anforderungen an geklebte Schichtholzprodukte wie Brettschichtholz, Balkenschichtholz, Brettschichtholz mit Universal-Keilzinkenverbindungen sowie Verbundbauteile aus Brettschichtholz zur Verwendung im Hoch- und Brückenbau fest. Die Norm gilt für Brettschichtholz aus den in dieser Norm aufgelisteten Nadelholzarten oder aus Pappel. Mit Einschränkungen könnte Brettschichtholz auf der Grundlage einiger Bestimmungen dieser Europäischen Norm aus anderen Laubholzarten als Pappel hergestellt werden.

Für die Herstellung von Lamellen sowie für das Verbinden von Brettschichtholzkomponenten ist eine Keilverzinkung notwendig (Anmerkung zu Begrifflichkeit: In EN DIN 14080:2013 (D) wird die Benennung Keilzinkenverbindung für Keilzinkenverbindungen in Lamellen verwendet, während Keilzinkenverbindungen zwischen Brettschichtholz-Komponenten als Universal-Keilzinkenverbindungen bezeichnet werden.)

Die geometrische Ausführung ist in Normen, wie der DIN EN 14080:2013 (D) geregelt. Die selbstzentrierende Endverbindung wird gebildet, indem eine Reihe von gleichartigen, symmetrischen, spitz zulaufenden Keilzinken mit einer Keilzinkenfräse in die Endstücke der Bretter eingefräst wird, die dann miteinander verklebt werden. Nachdem Klebstoffauftrag erfolgt ein Verpressen. Neben der Gewährleistung der mechanischen Eigenschaften der Keilverzinkenverbindung mit ausgehärteten Klebstoff trägt die geometrische Gestaltung der fertigungstechnischen Randbedingung Rechnung, dass die selbstzentrierende Keilverzinkung nach dem Pressen eine mechanische Stabilität hat, die eine Handhabung des Verbundes ohne Aushärtung des Klebstoffes gewährleistet.

Die Betrachtung des Fräswerkzeugs zeigt auch, dass die Keilgeometrie begrenzt wird durch die mechanische Beschaffenheit des mechanischen Fräswerkzeugs selbst. D.h. die Keile können nicht beliebig klein und eng zueinander realisiert werden. Der Verschleiß am filigranen Werkzeug hat unmittelbare Auswirkungen auch auf die Fräsgeometrie.

So betrifft US 2 705 981 A eine Maschine zum Verbinden von Holz.

JP 2004-025 820 A beschreibt ein Hebelverbindungsverfahren.

Ein Aggregat zum Anritzen von zu bearbeitenden Werkstücken aus Holz oder ähnlichen Material zu deren Splitterschutz geht aus DE 10 2009 019 113 A1 hervor.

Eine Beschreibung zu einem Verfahren zur Herstellung eines Möbelbauteils kann man DE 10 2013 101 373 A1 entnehmen.

In EP 3 103 033 A1 ist ein Verfahren zur Herstellung eines Trägers oderTrägerteils aus zwei oder mehr Bauteilen, ein derartiger Träger und Trägerteil und ein Gebäude damit offenbart.

Es ist daher Aufgabe der Erfindung, Möglichkeiten anzugeben, mit denen der Verschleiß von Werkzeugen vermieden und die Flexibilität beim Fügen erhöht werden kann. Erfindungsgemäß wird diese Aufgabe mit einem Verfahren, das die Merkmale des Anspruchs 1 aufweist, gelöst. Vorteilhafte Ausgestaltungen und Weiterbildungen können mittels Merkmalen, die in abhängigen Ansprüchen enthalten sind, realisiert werden.

Bei dem Verfahren wird so vorgegangen, dass in einem Verfahrensschritt a) an einer zum Fügen genutzten Stirnfläche eines ersten Holzbauelementes Konturelemente und an einer zum Fügen genutzten Stirnfläche eines zweiten Holzbauelementes komplementäre Konturelemente ausgebildet und in einem zweiten Verfahrensschritt b) die zu fügenden ersten und zweiten Holzbauelemente mit ihren Stirnflächen durch formschlüssigen Eingriff der jeweiligen Konturelemente gefügt werden. Dabei werden im Verfahrensschritt a) die Konturelemente mittels mindestens eines von einer Laserstrahlquelle emittierten und in Richtung der jeweiligen Oberfläche der Stirnfläche fokussierten Laserstrahls durch einen lokal definierten Materialabtrag ausgebildet. Dabei wird bevorzugt Laserstrahlung mit einer Wellenlänge > 900 nm, besonders bevorzugt > 1 µm eingesetzt.

Die Konturelemente können beim Verfahrensschritt a) so ausgebildet werden, dass im Verfahrensschritt b) eine Presspassung erhalten wird und/oder vor der Durchführung des Verfahrensschritts b) die Oberfläche mindestens eine der mit Konturelementen versehenen zur Fügung genutzten Stirnflächen mit einem Haftvermittler beschichtet wird. Mittels Haftvermittler kann zusätzlich ein Stoffschluss erreicht werden.

Es können dabei auch Konturelemente, die Hinterschneidungen bilden, ausgebildet werden.

Konturelemente können mit Erhebungen und Vertiefungen, die bevorzugt unterschiedliche Geometrien und/oder Dimensionierungen an einer jeweiligen Stirnfläche aufweisen, ausgebildet werden.

Vorteilhaft können mindestens zwei Laserstrahlen oder Teilstrahlen, die durch Strahlteilung eines Laserstrahls erhalten worden sind, eingesetzt und mit jeweils unterschiedlichem Einfallswinkel zur Ausbildung von Konturelementen auf die jeweilige Oberfläche einer Stirnfläche gerichtet werden. Dadurch kann die Produktivität erhöht und/oder dazu können die Laser- oder Teilstrahlen mit jeweils unterschiedlichen Betriebsparametern betrieben werden, so dass mit den jeweiligen einzelnen Laser- oder Teilstrahlen ein unterschiedlicher Materialabtrag erfolgt und dadurch unterschiedlich geometrisch gestaltete und/oder dimensionierte Konturelemente an der jeweiligen Stirnfläche ausgebildet werden. Als Betriebsparameter können, z.B. die Laserleistung, die Fokussierung, die Vorschubbewegung des jeweiligen Brennflecks, der Einfallswinkel der jeweiligen Laser- oder Teilstrahlen, die Pulsung (Pulslänge, -Pulspause) angepasst werden.

Es besteht bei der Erfindung die Möglichkeit, an und/oder zwischen Oberflächen von Konturelementen weitere erheblich kleiner dimensionierte Konturelemente auszubilden. Diese kleineren Konturelemente können genutzt werden, um die sich beim Fügen berührenden Oberflächen zu vergrößern, ähnlich wie es mit einer aufgerauten Oberfläche möglich ist. Es können aber auch keilförmige kleinere Konturelemente ausgebildet werden, die beim Fügen kraftschlüssig in die Oberfläche der zum Fügen genutzten Stirnfläche des jeweils anderen zu fügenden Holzbauelementes eingepresst werden und dadurch zusätzlich auch eine kraftschlüssige Verbindung der Holzbauelemente erreicht werden kann.

Im Gegensatz zu größer dimensionierten Konturelementen, die Kantenlängen von 5 mm und mehr aufweisen können, können kleiner dimensionierte Konturelemente im mm-Bereich oder gar kleiner ausgebildet werden.

### Variante A: "klassisches" Keilzinkenprofil mittels Laserstrukturieren herstellen

Für das Laserstrukturieren kommen vorzugsweise CO₂-Laserstrahlquellen mit einer Wellenlänge von 10,6 µm zum Einsatz, bei der die Absorption der Energie in organischen Materialien, wie auch Holz größer 95% ist. Die Strahlqualität bzw. das Intensitätsprofil eines jeweiligen dazu genutzten Laserstrahls sollten einem TEM00-Mode (Gauß-Mode) entsprechen. Für die Erzeugung der Keilverzinkung mit keilförmigen Konturelementen kann ein fokussierter Laserstrahl beispielsweise über Scannerspiegel abgelenkt und in ein- bis mehrfachen linienförmigen Überfahrten der Holzwerkstoff abgetragen werden. Die Intensitätsverteilung im Brennfleck bestimmt dabei die geometrische Gestalt und Kontur des Abtrages. Über die eingetragene Leistung, die lokale Intensitätsverteilung, die Größe des fokussierten Laserbrennflecks(-spots), lokaler Einwirkdauer über die Scannerparameter gesteuert, die Anzahl der Überfahrten, die Pulsung des Laserstrahls sowie Schutzgas und Absaugung der Abprodukte kann die Tiefe und Breite der Keilverzinkung angepasst werden. Die Tiefe und Gestalt der laserbasiert erzeugten Keilverzinkung sollte aus fertigungstechnischen Gründen eine Gestalt aufweisen, die nach einem Klebstoffauftrag und Zusammenpressen eine mechanische Stabilität hat, die eine Handhabung des Verbundes ohne Aushärtung des Klebstoffes gewährleistet. Diese Parameter können auch bei anderen Geometrien von Konturelementen entsprechend angepasst genutzt werden, um definiert Einfluss zu nehmen.

Hinsichtlich der Beschaffenheit des oberflächennahen Bereichs kann vorteilhaft neben der Wellenlänge des CO₂-Laserstrahls von 10.6 µm zusätzlich auf die Wirkung von Laserstrahlquellen mit einer Wellenlänge von unter 10,6 µm zurückgegriffen werden. Im Fall des avisierten Naturstoffes Holz kann zum Beispiel der Energieeintrag im Bereich der Oberfläche (10,6 µm) und als Volumenabsorption (1,06 µm) gesteuert erfolgen. Mit der Entwicklung von neuen Laserstrahlquellen mit höherer Leistung im sichtbaren Bereich sowie Wellenlängen um 2 µm sind angepasste Bearbeitungsmöglichkeiten gegeben. Der parallele Betrieb dieser Wellenlängen ist bekannt und wurde bereits zum Trennen von Faserverbundwerkstoffen demonstriert. Die somit über die Kopplung unterschiedlicher Wellenlängen (zeitlich und räumlich variabel), der eingesetzten Laserstrahlung gezielt einstellbare Energieabsorption im Holzwerkstoff ermöglicht zum einen eine Oberflächenerwärmung mit der eine Karbonisierung (Wellenlängen ^{~} 10,6 µm) und eine Volumenerwärmung mit kürzeren Wellenlängen und somit geringer Absorption, aber größerer Einwirktiefe für die gezielte Einstellung thermisch bedingter Veränderungen in oberflächennahen Bereichen des Holzwerkstoffes erreicht werden kann. Dies kann zum Beispiel ein gezieltes Aufschmelzen von Lignin als inhärenter Holzanteil zur Versieglung des Oberflächenbereiches sein.

### Variante B: Geometrischer Formschluss mittels Laserstrukturieren

Bei der geometrischen Gestaltung der Keilverzinkung nach DIN EN 14080:2013 (D) wird der fertigungstechnischen Randbedingung Rechnung, dass die selbstzentrierende Keilverzinkung nach dem Pressen eine mechanische Stabilität hat, die eine Handhabung des Verbundes ohne Aushärtung des Klebstoffes gewährleistet. Bestimmend für die mechanische Stabilität sind der Winkel der Keilverzinkung, die Größe der sich berührenden Flächen und die Haftreibung der Holzflächen an den Flanken der Keilzinken. Daraus ergibt sich eine Mindestprofiltiefe sowie Gestalt der Keilverzinkung und somit ein Abtragsvolumen an Holzwerkstoff. Für die Minimierung des Abtragvolumens und gleichzeitiger Gewährleistung einer mechanischen Handhandhabungsfestigkeit des so erhaltenen Holzverbundes bieten sich auch von der Keilverzinkung abweichende Geometrien an, die zum Beispiel auch einen mechanischen Formschluss ermöglichen. Über die gezielte Einstellung der Laserbestrahlung besteht die Möglichkeit, zum Beispiel schwalbenschwanzförmige Strukturen in Fügebereichen auszubilden, die bei einem Zusammenfügen von so vorbereiteten Holzteilen zu einer Verklammerung über Formschluss führen können. Das Fügen der Strukturen kann über seitliches Einschieben oder senkrechtes Pressen erfolgen. Für das Pressen können die oberen Ecken abgerundet werden, sodass diese als Zentrierhilfe fungieren. Bei einem Pressen kommt es zur elastischen Deformation der Struktur und die nachfolgende elastische Rückfederung bewirkt neben einen Formschluss auch einen Kraftschluss. Damit wird erfindungsgemäß eine Fixierung bei deutliche geringerem Abtragsvolumen erreicht. Die Größe der Struktureinheiten kann in Abhängigkeit der Mikrostruktur des Holzwerkstoffes skaliert und optimiert werden. Die geringeren Abtragsvolumina ermöglichen bei gleichbleibender Laserleistung somit die Bearbeitung größerer Flächen und somit einen höheren Durchsatz in Bearbeitungsanlagen. Der beschriebene geometrische Formschluss mittels Laserstrukturieren ist nur beispielhaft.

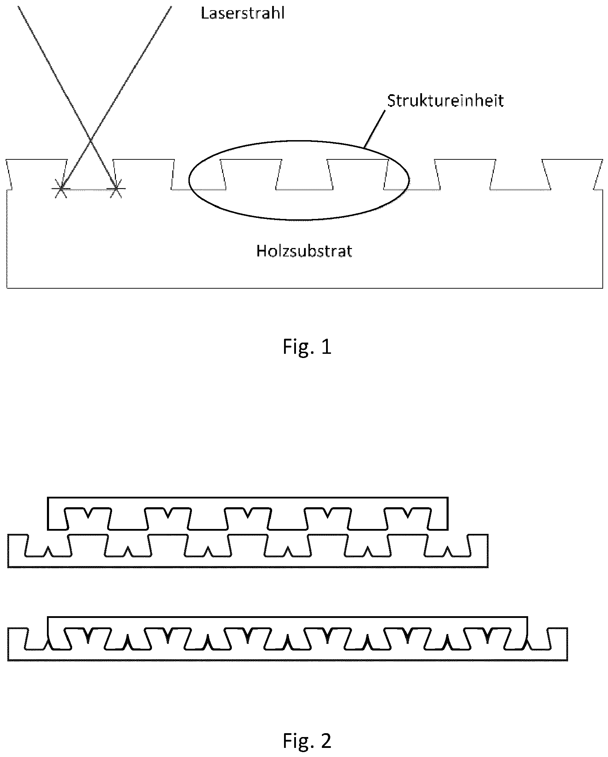

Die schwalbenschwanzähnlichen Strukturen als Konturelemente mit Hinterschneidungen können vorteilhaft mit einer gekreuzten Laserstrahlanordnung mindestens zweier Laserstrahlen, die in geeigneten Winkelausrichtungen auf eine Oberfläche eines zu fügenden Holzelements gerichtet werden, erzeugt werden (s. Figur 1).

Dabei kann ein Laserstrahl über ein reflektierendes Element (Dachkantspiegel) in zwei Teilstrahlen aufgespalten werden. Jeder der Teilstrahlen wird über je ein verschwenkbares reflektierendes Element (Spiegel) gelenkt und ggf. anschließend fokussiert. Die Ausrichtung der verschwenkbaren reflektierenden Elemente zueinander ermöglicht die Kreuzung/Überlagerung beider Laserstrahlen in einem Punkt. Die schräg einfallenden einzelnen Laser- oder Teilstrahlen ermöglichen bei Relativbewegung zwischen Werkstück und Laser-, Teilstrahlen senkrecht zur Kreuzungsebene den Abtrag von linienförmigen hinterschnittenen Strukturen.

Der verbleibende Steg wird über eine Relativbewegung der Laserstrahlen oder Bewegung in Z-Richtung abgetragen, sodass eine erzeugt wird. Als Struktureinheit kann man auch ein so gestaltetes Konturelement verstehen.

### Variante C: Geometrischer Formschluss und Kraftschluss über Verkeilen mittels Laserstrukturieren

Ergänzend zu Variante B wird eine Kombination von Form- und Kraftschluss vorgeschlagen. Ein unvollständiger Abtrag des ermöglicht eine Geometrie, die bei einem Verpressen der zu fügenden Stirnseiten von Brettlamellen zu einem Aufspalten in Faserlängsrichtung und zu einer Kombination von Kraft- und Formschluß führen.

Die Art einer Zapfenverkeilung mit entsprechenden Konturelementen kann mittels Laserstrahl ausgebildet werden. Ebenso die Holzstifte, die in die gegenüberliegende Seite hineinverkeilt werden können, können mittels Laserstrahlung werkzeugfrei vorpräpariert werden. Die geometrische Abmessung der modifizierten Schwalbenschwanz-Struktur (s. Figur 2) kann frei gewählt werden. Angepasst an Festigkeitsanforderungen und Mikrostruktur der jeweiligen Holzwerkstoffe sind Strukturtiefen von 1/10 mm bis zu ca. 10 mm denkbar.

### Variante D: Mikrostrukturieren mittels Laser zur Vergrößerung der Oberfläche in Verbindung mit schnellhärtenden Klebstoffsystemen

Die Lasttragfähigkeit von stoffschlüssigen Klebverbindungen wird neben den Haftungsbedingungen an der Klebfläche und den Festigkeitseigenschaften des Klebstoffs selbst von der effizient zur Verfügung stehenden Oberfläche bestimmt. Neben den bereits beschriebenen erfindungsgemäßen Lösungsansätzen, kann eine Oberflächenvergrößerung mittels Lasermikrostrukturieren mit entsprechend klein dimensionierten Konturelementen, die über die zu fügenden Oberflächen möglichst gleichmäßig verteilt ausgebildet werden, vorgenommen werden. Über eine Laserabtragsbehandlung mit gepulst betriebenenen Laserstrahlquellen und/oder kontinuierlich emittierenden Laserstrahlquellen in Verbindungen mit einer Strahlablenkung kann mit hohen lokalen Intensitäten im jeweiligen Brennfleck bei kurzer Einwirkdauer Material an der Oberfläche durch Ablation abgetragen werden. Aufgrund inhomogener lokaler Werkstoffeigenschaften des Holzwerkstoffes, insbesondere Feuchte und Dichte (Jungholz/Altholz, ..), kommt es durch Überlagerung mit der Intensitätsverteilung im Brennfleck zu einer stochastischen Strukturierung der Oberfläche und zu einer signifikanten Vergrößerung der Oberfläche. In Verbindung mit schnellaushärtendem Klebstoff als Haftvermittler, wie zum Beispiel anaeroben Systemen oder Hotmelts können unter Druck gefügte Bretter erfindungsgemäß somit auf diese Weise lasttragend stirnseitig verbunden werden. Zudem ermöglicht die Mikrostrukturierung in Kombination mit der Makrostrukturierung eine verbesserte Verkeilung der ausgebildeten Verzinkungen. Für eine effiziente Anwendung der Laserstrukturierung und der Erzielung hohen Bearbeitungsraten (Materialdurchsatz) sollte die relative Lasereinwirkdauer im Prozess so hoch wie möglich sein. Für die Erzeugung der o.g. Strukturen, die mit den ausgebildeten Konturelementen ausgebildet werden soll, ist üblicherweise eine mehrfache Überfahrt des Laserbrennflecks erforderlich. Bei der Bearbeitung kleiner Flächen mit hoher lokaler Wiederholrate (z. B. einzelner Bretter) kommt es zu einer unerwünschten Erwärmung der Holzoberfläche und es kommt auch unter inerter Atmosphäre zu einer Verkohlung, da im Holzwerkstoff Sauerstoff gebunden ist. Daher ist eine Strahlführung und - formung vorteilhaft, die eine stirnseitige Laserbehandlung von mehreren Holzbauelementen (Brettern) im Paket ermöglicht. Damit vergrößert sich der zeitliche Abstand, bei der der Laserbrennfleck bei den mehrfachen Überfahrten lokal an den jeweiligen Positionen einwirkt und der Holzwerkstoff kühlt ab. Eine kritische Erwärmung und Verkohlung der laserbehandelten Oberflächen kann weitgehend vermieden werden.

Bauen mit Holz ermöglicht individuelle kostengünstige Konstruktion und speichert im Gegensatz zu Stahl 1,8 t COz/t. Dazu wird derzeit zu über 90% Nadelholz (soft wood), wie z.B. Fichtenholz im Bauwesen eingesetzt. Globale Erwärmung, langanhaltende Trockenperioden und Insektenbefall lassen aber Nadelholzbestände unwiederbringlich weltweit dramatisch schrumpfen. Trockenresistente und schnellwachsende Laubhölzer (hard wood), wie z.B. Robinie sind unabdingbar für die erforderliche und nachhaltige Wiederaufforstung von Kalamitätsflächen. Limitierend für die großtechnische Verarbeitung und Verwendung ist die Härte dieser Hölzer. Nicht angepasste Verarbeitungstechnologie, hoher Werkzeugverschleiß bei spannender Bearbeitung limitieren die breite technische Nutzung von Laubhölzer (hard wood) wie Robinie. Die Lasertechnologie kann hier zum "key enabler" in der holzverarbeitenden Industrie werden. Laserstrahlung, die zum Abtragen, Trennen und Strukturieren eingesetzt wird, arbeitet kontaktlos und verschleißfrei. Ziel der Erfindung ist es, unter Einsatz innovativer Lasertechnologien die fertigungstechnischen Hemmnisse für industriell gefertigte Holzprodukte zu beseitigen, um zukünftig der breiten technischen Verwendung von Laubholz (hard wood) den Weg zu ebnen.

Die Möglichkeiten der Laserbehandlung können auch zum Witterungsschutz nicht nur im Bereich der Keilverzinkung, sondern auch der gesamten Holzoberfläche genutzt werden. Über eine Karbonisierung und Verschmelzen der Oberfläche kann vergleichbar zum etablierten Flämmen / Abbrennen die Witterungsbeständigkeit, ohne den Einsatz biozider Beschichtungen und Lasuren verbessert werden. Der Wegfall biozider Beschichtungen würde einen maßgeblichen Beitrag für geschlossenen Werkstoffkreisläufe für Altholz ermöglichen. Derzeit werden derartig behandelte Holzwerkstoffe gemäß der Verordnung über Anforderungen an die Verwertung und Beseitigung von Altholz, kurz: Altholzverordnung (AltholzV), der Kategorie A IV zugeordnet und eine energetische Verwertung, Synthesegas- und Holzkohleherstellung nur in dafür genehmigten Anlagen erlaubt. Eine stoffliche Weiterverwertung z. B. in Spanplatten oder anderen Holzfaserwerkstoffen ist bei einem Biozideinsatz ausgeschlossen.

Dabei zeigen:
- Figur 1: schwalbenschwanzähnlichen Strukturen als Konturelemente mit Hinterschneidungen und
- Figur 2: modifizierten Schwalbenschwanz-Strukturen.

## Patentansprüche

1. Verfahren zum Fügen von Holzbauelementen, insbesondere plattenförmigen Holzbauelementen, bei dem
in einem Verfahrensschritt a) an einer zum Fügen genutzten Stirnfläche eines ersten Holzbauelementes Konturelemente und an einer zum Fügen genutzten Stirnfläche eines zweiten Holzbauelementes komplementäre Konturelemente ausgebildet und in einem zweiten Verfahrensschritt b) die zu fügenden ersten und zweiten Holzbauelemente mit ihren Stirnflächen durch formschlüssigen Eingriff der jeweiligen Konturelemente gefügt werden,
**dadurch gekennzeichnet, dass**
im Verfahrensschritt a) die Konturelemente mittels mindestens eines von einer Laserstrahlquelle emittierten und in Richtung der jeweiligen Oberfläche der Stirnfläche fokussierten Laserstrahls durch einen lokal definierten Materialabtrag ausgebildet werden, wobei insbesondere Laserstrahlung mit einer Wellenlänge > 900 nm eingesetzt wird.

2. Verfahren nach Anspruch 1, **dadurch gekennzeichnet, dass** die Konturelemente beim Verfahrensschritt a) so ausgebildet werden, dass im Verfahrensschritt b) eine Presspassung erhalten wird und/oder vor der Durchführung des Verfahrensschritts b) die Oberfläche mindestens eine der mit Konturelementen versehenen zur Fügung genutzten Stirnflächen mit einem Haftvermittler beschichtet wird.

3. Verfahren nach einem der vorhergehenden Ansprüche, **dadurch gekennzeichnet, dass** Konturelemente, die Hinterschneidungen bilden, ausgebildet werden.

4. Verfahren nach einem der vorhergehenden Ansprüche, **dadurch gekennzeichnet, dass** Konturelemente mit Erhebungen und Vertiefungen, die bevorzugt unterschiedliche Geometrien und/oder Dimensionierungen an einer jeweiligen Stirnfläche aufweisen, ausgebildet werden.

5. Verfahren nach einem der vorhergehenden Ansprüche, **dadurch gekennzeichnet, dass** mindestens zwei Laserstrahlen oder Teilstrahlen, die durch Strahlteilung eines Laserstrahls erhalten worden sind, eingesetzt und mit jeweils unterschiedlichem Einfallswinkel zur Ausbildung von Konturelementen auf die jeweilige Oberfläche einer Stirnfläche gerichtet werden.

6. Verfahren nach einem der vorhergehenden Ansprüche, **dadurch gekennzeichnet, dass** zwei Laserstrahlen oder Teilstrahlen mit jeweils unterschiedlichen Betriebsparametern betrieben werden, so dass mit den jeweiligen einzelnen Laser- oder Teilstrahlen ein unterschiedlicher Materialabtrag erfolgt und dadurch unterschiedlich geometrisch gestaltete und/oder dimensionierte Konturelemente an der jeweiligen Stirnfläche ausgebildet werden.

7. Verfahren nach einem der vorhergehenden Ansprüche, **dadurch gekennzeichnet, dass** an und/oder zwischen Oberflächen von Konturelementen weitere erheblich kleiner dimensionierte Konturelemente ausgebildet werden.

8. Verfahren nach einem der vorhergehenden Ansprüche, **dadurch gekennzeichnet, dass** Laserstrahlen mit unterschiedlicher Wellenlänge und somit unterschiedlichen Absorptionsverhalten und Einwirktiefe in Holzwerkstoffen für eine Materialwechselwirkung direkt an der Oberfläche einer Stirnfläche sowie im oberflächennahen Volumina des jeweiligen Holzbauelements eingesetzt werden.

9. Verfahren nach einem der vorhergehenden Ansprüche, **dadurch gekennzeichnet, dass** eine Karbonisierung der Oberfläche und Verschmelzen von ligninhaltigen Holzbestandteilen an der Oberfläche des jeweiligen Holzbauelements zur Verbesserung der Witterungsbeständigkeit des Holzes ohne den Einsatz biozider Beschichtungen durchgeführt wird.

10. Verfahren nach einem der vorhergehenden Ansprüche, **dadurch gekennzeichnet, dass** eine Strahlführung und -formung des/der Laserstrahlen eingesetzt wird, die zu einer Bearbeitung für das Fügen von mehreren Holzbauelementen im Paket genutzt wird.
